# EUROPEAN PATENT APPLICATION

(11) **EP 4 808 246 A1**
(43) Date of publication of application: **16.09.2026**
(21) Application number: 23958008.7
(22) Date of filing: 09.11.2023
(51) Int. Cl.: H04W 72/23

(54) **OTFS SYSTEM RESOURCE CONFIGURATION METHOD AND APPARATUS, AND STORAGE MEDIUM**

(71) Applicant: Beijing Xiaomi Mobile Software Co., Ltd., Beijing 100085 (CN)
(72) Inventor: ZHANG, Zhenyu, Beijing 100085 (CN); DUAN, Gaoming, Beijing 100085 (CN)
(74) Representative: Dehns Germany Partnerschaft mbB
(86) International application number: PCT/CN2023/130848
(87) International publication number: WO 2025/097401

(57) **Abstract**

An OTFS system resource configuration method and apparatus, and a storage medium. The OTFS system resource configuration method comprises: determining a first delay Doppler (DD) domain resource grid, the first DD domain resource grid comprising a DD domain resource unit allocated to a terminal set, and the terminal set comprising a terminal using the same reference signal as a pilot frequency; allocating the DD domain resource unit in the first DD domain resource grid to the terminal; sending first information to the terminal, the first information being used to indicate the DD domain resource unit allocated to the terminal. Based on said method, reasonable allocation of DD domain resource units can be implemented.

## Description

### TECHNICAL FIELD

The present disclosure relates to the field of communication technologies, and in particular, to a method of resource configuration for an OTFS system, an apparatus of resource configuration for an OTFS system, and a storage medium.

### BACKGROUND

In mobile network communication, Orthogonal Time Frequency Space (OTFS) modulation technology has been proposed in recent years, which may improve the performance of the wireless communication system in the case of high Doppler. However, there are many problems when OTFS resources are configured for a plurality of terminals.

### SUMMARY

Embodiments of the present disclosure provide a method of resource configuration for an OTFS system, an apparatus of resource configuration for an OTFS system, and a storage medium, to resolve the technical problem of configuring OTFS resources for a plurality of terminals in the related art.

According to a first aspect of the embodiments of the present disclosure, there is provided a method of resource configuration for an OTFS system, which is performed by a network device. The method includes: determining a first delay Doppler (DD) domain resource grid, where the first DD domain resource grid includes DD domain resource elements allocated to a terminal set, and the terminal set includes terminals using a same reference signal as a pilot; allocating a DD domain resource element in the first DD domain resource grid to a terminal; and sending first information to the terminal, where the first information is used to indicate the DD domain resource element allocated to the terminal.

According to a second aspect of the embodiments of the present disclosure, there is provided a method of resource configuration for an OTFS system, which is performed by a terminal. The method includes: receiving first information from a network device, where the first information is used to indicate a DD domain resource element allocated to the terminal; and determining, based on the first information, the DD domain resource element allocated to the terminal in a first DD domain resource grid, where the first DD domain resource grid includes DD domain resource elements allocated to a terminal set in which the terminal is located, and the terminal set includes terminals using a same reference signal as a pilot.

According to a third aspect of the embodiments of the present disclosure, there is provided an apparatus of resource configuration for an OTFS system. The apparatus includes: a processing module, configured to determine a first delay Doppler (DD) domain resource grid, where the first DD domain resource grid includes DD domain resource elements allocated to a terminal set, and the terminal set includes terminals using a same reference signal as a pilot; and, a transceiver module, configured to allocate a DD domain resource element in the first DD domain resource grid to a terminal.

According to a fourth aspect of the embodiments of the present disclosure, there is provided an apparatus of resource configuration for an OTFS system. The apparatus includes: a transceiver module, configured to receive first information from a network device, where the first information is used to indicate a DD domain resource element allocated to a terminal; and a processing module, configured to determine, based on the first information, the DD domain resource element allocated to the apparatus in a first DD domain resource grid, where the first DD domain resource grid includes DD domain resource elements allocated to a terminal set in which the terminal is located, and the terminal set includes terminal using a same reference signal as a pilot.

According to a fifth aspect of the embodiments of the present disclosure, there is provided a network device, including: one or more processors, and a memory coupled to the processors, where the memory stores an executable instruction, and when the executable instruction is executed by the processors, the network device is caused to perform the method of resource configuration for the OTFS system according to the first aspect.

According to a sixth aspect of the embodiments of the present disclosure, there is provided a terminal, including: one or more processors, and a memory coupled to the processors, where the memory stores an executable instruction, and when the executable instruction is executed by the processors, the network device is caused to perform the method of resource configuration for the OTFS system according to the second aspect.

According to a seventh aspect of the embodiments of the present disclosure, there is provided a communication system, including: a network device, configured to implement the method of resource configuration for the OTFS system according to the first aspect; and a terminal, configured to implement the method of resource configuration for the OTFS system according to the second aspect.

According to an eighth aspect of the embodiments of the present disclosure, there is provided a storage medium, where the storage medium stores an instruction, and when the instruction runs on a communication device, the communication device is caused to perform the method of resource configuration for the OTFS system according to the first aspect or the second aspect.

Based on the foregoing embodiments, the DD domain resource element in the first DD domain resource grid is allocated to the terminal using the same reference signal, thus implementing reasonable allocation of the DD domain resource element.

### BRIEF DESCRIPTION OF THE DRAWINGS

To describe the technical solutions in the embodiments of the present disclosure more clearly, the accompanying drawings required for describing the embodiments will be briefly described below. Apparently, the accompanying drawings in the following description are merely some embodiments of the present disclosure, and those of ordinary skill in the art may still obtain other drawings from these accompanying drawings without creative efforts.
FIG. 1 is a schematic architectural diagram of a communication system shown according to an embodiment of the present disclosure.
FIG. 2 is a schematic interaction diagram of a method of resource configuration for an OTFS system shown according to an embodiment of the present disclosure.
FIG. 3A is a schematic flowchart of a method of resource configuration for an OTFS system according to an embodiment of the present disclosure.
FIG. 3B is a schematic flowchart of a method of resource configuration for an OTFS system shown according to an embodiment of the present disclosure.
FIG. 3C is a schematic flowchart of a method of resource configuration for an OTFS system shown according to an embodiment of the present disclosure.
FIG. 3D is a schematic flowchart of a method of resource configuration for an OTFS system shown according to an embodiment of the present disclosure.
FIG. 3E is a schematic flowchart of a method of resource configuration for an OTFS system shown according to an embodiment of the present disclosure.
FIG. 3F is a schematic flowchart of a method of resource configuration for an OTFS system shown according to an embodiment of the present disclosure.
FIG. 3G is a schematic flowchart of a method of resource configuration for an OTFS system shown according to an embodiment of the present disclosure.
FIG. 3H is a schematic flowchart of a method of resource configuration for an OTFS system shown according to an embodiment of the present disclosure.
FIG. 4 is a schematic flowchart of a method of resource configuration for an OTFS system shown according to an embodiment of the present disclosure.
FIG. 5 is a schematic block diagram of an apparatus structure of a network device shown according to an embodiment of the present disclosure.
FIG. 6 is a schematic block diagram of an apparatus structure of a terminal shown according to an embodiment of the present disclosure.
FIG. 7 is a schematic structural diagram of a communication device provided according to an embodiment of the present disclosure.
FIG. 8 is a schematic structural diagram of a chip provided according to an embodiment of the present disclosure.

### DETAILED DESCRIPTION

Embodiments of the present disclosure provide a method of resource configuration for an OTFS system, an apparatus of resource configuration for an OTFS system, and a storage medium.

According to a first aspect, an embodiment of the present disclosure provides a method of resource configuration for an OTFS system, performed by a network device. The method includes: determining a first delay Doppler (DD) domain resource grid, where the first DD domain resource grid includes DD domain resource elements allocated to a terminal set, and the terminal set includes terminals using a same reference signal as a pilot; allocating a DD domain resource element in the first DD domain resource grid to a terminal; and sending first information to the terminal, where the first information is used to indicate the DD domain resource element allocated to the terminal.

Based on the foregoing embodiment, the DD domain resource element in the first DD domain resource grid is allocated to the terminal using the same reference signal, thus implementing reasonable allocation of the DD domain resource element.

By combining some embodiments of the first aspect, in some embodiments, determining the first delay Doppler (DD) domain resource grid includes: determining the first DD domain resource grid from a delay Doppler (DD) domain resource grid corresponding to a first OTFS frame.

By combining some embodiments of the first aspect, in some embodiments, the reference signal is a demodulation reference signal (DMRS).

By combining some embodiments of the first aspect, in some embodiments, allocating the DD domain resource element in the first DD domain resource grid to the terminal includes: allocating the DD domain resource element in the first DD domain resource grid to the terminal based on a delay domain and/or a Doppler domain.

By combining some embodiments of the first aspect, in some embodiments, the first information includes at least one of: first configuration information, where the first configuration information is used to indicate the first DD domain resource grid; second configuration information, where the second configuration information is used to indicate the DD domain resource element allocated to the terminal; or, third configuration information, where the third configuration information is used to indicate a DD domain resource element allocated to the reference signal and a DD domain resource element allocated to a guard interval.

By combining some embodiments of the first aspect, in some embodiments, the first information is carried by a radio resource control (RRC) signaling.

By combining some embodiments of the first aspect, in some embodiments, the first configuration information includes at least one of: a start position of the first DD domain resource grid in a delay domain, an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

By combining some embodiments of the first aspect, in some embodiments, the second configuration information includes at least one of: a start position of the DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity of the DD domain resource element allocated to the terminal in a Doppler domain.

By combining some embodiments of the first aspect, in some embodiments, the second configuration information includes a start position of the DD domain resource element allocated to the terminal in a Doppler domain, where the DD domain resource element allocated to the terminal, the DD domain resource element allocated to the reference signal and the DD domain resource element allocated to the guard interval form the first DD domain resource grid in a delay domain.

By combining some embodiments of the first aspect, in some embodiments, the DD domain resource element allocated to the terminal in the terminal set in the first DD domain resource grid does not include a DD domain resource element having a same delay domain position as the reference signal.

According to a second aspect, an embodiment of the present disclosure provides a method of resource configuration for an OTFS system, performed by a terminal. The method includes: receiving first information from a network device, where the first information is used to indicate a DD domain resource element allocated to the terminal; and determining, based on the first information, the DD domain resource element allocated to the terminal in a first DD domain resource grid, where the first DD domain resource grid includes DD domain resource elements allocated to a terminal set in which the terminal is located, and the terminal set includes terminals using a same reference signal as a pilot.

By combining some embodiments of the first aspect, in some embodiments, the first information includes at least one of: first configuration information, where the first configuration information is used to indicate the first DD domain resource grid; second configuration information, where the second configuration information is used to indicate the resource element allocated to the terminal; or, third configuration information, where the third configuration information is used to indicate a DD domain resource element allocated to the reference signal and a DD domain resource element allocated to a guard interval.

By combining some embodiments of the first aspect, in some embodiments, the first DD domain resource grid is determined from a delay Doppler (DD) domain resource grid corresponding to a first OTFS frame.

By combining some embodiments of the first aspect, in some embodiments, the reference signal is a demodulation reference signal (DMRS).

By combining some embodiments of the first aspect, in some embodiments, the first information is carried by an RRC signaling.

By combining some embodiments of the first aspect, in some embodiments, the first configuration information includes at least one of: a start position of the first DD domain resource grid in a delay domain; an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

By combining some embodiments of the first aspect, in some embodiments, the second configuration information includes at least one of: a start position of the DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity of the DD domain resource element allocated to the terminal in a Doppler domain.

By combining some embodiments of the first aspect, in some embodiments, in a case that the DD domain resource element allocated to the reference signal and the DD domain resource element allocated to the guard interval occupy all resource elements of the first DD domain resource grid in a delay domain, the second configuration information includes a start position of the resource element allocated to the terminal in a Doppler domain.

By combining some embodiments of the first aspect, in some embodiments, the DD domain resource element allocated to the terminal in the first DD domain resource grid does not include a DD domain resource element having a same delay domain position as the reference signal.

According to a third aspect, there is provided an apparatus of resource configuration for an OTFS system. The apparatus includes: a processing module, configured to determine a first delay Doppler (DD) domain resource grid, where the first DD domain resource grid includes DD domain resource elements allocated to a terminal set, and the terminal set includes terminals using a same reference signal as a pilot; and, a transceiver module, configured to send first information to the terminal, where the first information is used to indicate the DD domain resource element allocated to the terminal.

According to a fourth aspect, there is provided an apparatus of resource configuration for an OTFS system, where the apparatus includes: a transceiver module, configured to receive first information from a network device, where the first information is used to indicate a DD domain resource element allocated to a terminal; and a processing module, configured to determine, based on the first information, the DD domain resource element allocated to the apparatus in a first DD domain resource grid, where the first DD domain resource grid includes DD domain resource elements allocated to a terminal set in which the terminal is located, and the terminal set includes terminals using a same reference signal as a pilot.

According to a fifth aspect, there is provided a network device, including: one or more processors; and a memory, coupled to the processors, where the memory stores an executable instruction, and when executable instruction is executed by the processors, the network device is caused to perform the method of resource configuration for the OTFS system described in the first aspect and the optional embodiments of the first aspect.

According to a sixth aspect, there is provided a terminal, including: one or more processors; and a memory, coupled to the processors, where the memory stores an executable instruction, and when executable instruction is executed by the processors, the terminal is caused to perform the method of resource configuration for the OTFS system described in the second aspect and the optional embodiments of the second aspect.

According to a seventh aspect, an embodiment of the present disclosure provides a communication device, where the communication device includes: one or more processors; and a memory, coupled to the processor, where the memory stores an executable instruction, and when the executable instruction is executed by the processors, the processor is caused to invoke the executable instruction to cause the communication device to perform the method of resource configuration for the OTFS system described in the first aspect or the second aspect, and in the optional embodiments of the first aspect or the second aspect.

According to an eighth aspect, an embodiment of the present disclosure provides a communication system. The communication system includes: a network device configured to implement the method described in the first aspect and the optional embodiments of the first aspect, and a terminal configured to implement the method described in the second aspect and the optional embodiments of the second aspect.

According to a ninth aspect, an embodiment of the present disclosure provides a storage medium, where the storage medium stores an instruction, and when the instruction runs on a communication device, the communication device is caused to perform the method described in the first aspect or the second aspect, and in the optional embodiments of the first aspect or the second aspect.

According to a tenth aspect, an embodiment of the present disclosure provides a program product, and when the program product is executed by a communication device, the communication device is caused to perform the method described in the first aspect or the second aspect, and in the optional embodiments of the first aspect or the second aspect.

According to an eleventh aspect, an embodiment of the present disclosure provides a computer program, where when the computer program runs on a computer, the computer is caused to perform the method described in the first aspect or the second aspect, and in the optional embodiments of the first aspect or the second aspect.

It may be understood that the terminal, the network device, the communication device, the communication system, the storage medium, the program product, and the computer program are all configured to perform the method provided in the embodiments of the present disclosure. Therefore, for the beneficial effects that can be achieved by the forgoing, reference may be made to beneficial effects in the corresponding method, and details are not described here again.

Embodiments of the present disclosure provide a method of resource configuration for an OTFS system, an apparatus of resource configuration for an OTFS system, and a storage medium. In some embodiments, terms such as an information sending method, an information receiving method, an information processing method, a communication method, or the like may be replaced with each other. Terms such as a terminal, a network device, an information processing apparatus, a communication apparatus, or the like may be replaced with each other. Terms such as an information processing system, a communication system, or the like may be replaced with each other.

The embodiments of the present disclosure are not exhaustive, and are merely illustrative of some embodiments, which are not intended to limit the protection scope of the present disclosure. In the case of no contradiction, each step in an embodiment may be implemented as an independent embodiment, and the various steps may be arbitrarily combined with each other. For example, the solution after partial steps are removed in an embodiment may also be implemented as an independent embodiment, and the order of the various steps in an embodiment may be arbitrarily exchanged. In addition, optional embodiments of an embodiment may be arbitrarily combined with other each. In addition, the various embodiments may be arbitrarily combined with each other. For example, some or all of the steps of different embodiments may be arbitrarily combined with each other, and an embodiment may be combined with optional embodiments of other embodiments.

In the embodiments of the present disclosure, if there is no special description and a logical conflict, terms and/or descriptions between the embodiments have consistency, and may be referred to each other. The technical features in different embodiments may be combined with each other according to an internal logical relationship between them to form a new embodiment.

Terms used in the embodiments of the present disclosure are only for the purpose of describing specific embodiments, and are not intended to limit the present disclosure.

In the embodiments of the present disclosure, unless otherwise specified, the element represented in the singular form, such as "a", "an", "the", "the foregoing", "said", "the above-mentioned", or the like, may mean "one and only one", or may mean "one or more", "at least one", or the like.

For example, in a case that articles such as "a", "an", "the" or the like, in English are used in the translation, the noun after the article may be understood as a singular expression form, or may be understood as a plural expression form.

In the embodiments of the present disclosure, "a plurality of" means two or more.

In some embodiments, terms such as "at least on of", "one or more", "a plurality of", "multiple", or the like, may be replaced with each other.

In some embodiments, the recording manners such as "at least one of A or B", "A and/or B", "in one case, A is performed; in the other case, B is performed", "in response to one case, A is performed; in response to another case, B is performed", etc., may include the following technical solutions according to situations: in some embodiments A is performed (independently of B); in some embodiments B is performed (independently of A); in some embodiments, one is selected from A and B for performing (A or B is selectively performed); and in some embodiments, A and B are performed (both A and B are performed). When there are more branches, such as A, B and C, it is also similar with the foregoing.

In some embodiments, the recording manner such as "A or B" or the like may include the following technical solutions according to situations: in some embodiments, A is performed (independently of B); in some embodiments, B is performed (independently of A); and, in some embodiments, one is selected from A and B for performing (A or B is selectively performed). When there are more branches, such as A, B and C, it is also similar with the foregoing.

Prefix words such as "first", "second", or the like in the embodiments of the present disclosure are merely intended to distinguish different described objects, and do not constitute limitations on the position, order, priority, quantity, or content of the described object. For the description of the described object, reference may be made to the description of the context in the claims or embodiments, and it should not constitute a redundant limitation due to the use of the prefix words.

For example, if the described object is a "field", the ordinal terms before the "field" in the "first field" and the "second field" do not limit the position or sequence between the "fields". "First" and "second" do not limit whether the described "field" are in the same message, nor do limit the orders of "the first field" and the "second field". For another example, if the described object is a "level", the ordinal term before the "level" in the "first level" and the "second level" does not limit the priority between the "level". For another example, the quantity of the described object is not limited by the ordinal term, which may be one or more. Taking "a first apparatus" as an example, the quantity of the "apparatus" may be one or more. In addition, objects described by different prefix words may be the same as or different from each other. For example, if the described object is an "apparatus", the "first apparatus" and the "second apparatus" may be the same apparatus or different apparatuses, and the types of them may be the same or different. For another example, if the described object is "information", "first information" and "second information" may be the same information or different information, and the contents of them may be the same or different.

In some embodiments, "including A", "comprising A", "being used for indicating A" and "carrying A" may be interpreted as directly carrying A, or may be interpreted as indirectly indicating A.

In some embodiments, the terms such as "in response to...", "in response to determining...", "in the case of", "at the time that...", "When", "if", "in case", or the like, may be replaced with each other.

In some embodiments, terms such as "greater than", "greater than or equal to", "not smaller than", "more than", "more than or equal to", "no less than", "higher than", "higher than or equal to", "not lower than", "above", or the like, may be replaced with each other. Terms such as "smaller than", " smaller than or equal to", "not greater than", "less than", "less than or equal to", "no more than", "lower than", "lower than or equal to", "not higher than", "below", or the like may be replaced with each other.

In some embodiments, the apparatus or the like may be interpreted as an entity, or may be interpreted as virtual, and its name is not limited to the name recorded in the embodiments.

Terms such "apparatus", "equipment", "device", "circuit", "network element", "node", "function", "unit", "section", "system", "network", "chip", "chip system", "entity", "main body" or the like may be replaced with each other.

In some embodiments, the "network" may be interpreted as an apparatus (for example, an access network device, a core network device, etc.) included in the network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", or the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be replaced with each other.

In some embodiments, the access network device, the core network device, or the network device may be replaced with a terminal. For example, the structure in which communication between an access network device, a core network device, or a network device and a terminal is replaced with communication between a plurality of terminals (for example, device-to-device (D2D), vehicle-to-everything (V2X), or the like) may also be applied in the embodiments of the present disclosure. In this case, it may also be set as a structure that the terminal has all or part of the functions of the access network device. In addition, terms such as "uplink", "downlink", or the like, may also be replaced with terms (for example, "side") corresponding to communication between terminals. For example, an uplink channel, a downlink channel, etc. may be replaced with a sidelink channel; and, an uplink, a downlink, etc. may be replaced with a sidelink.

In some embodiments, the terminal may be replaced with an access network device, a core network device, or a network device. In this case, it may also be set as a structure that an access network device, or a core network device has all or part of the functions of the terminal.

In some embodiments, acquiring data, information, etc. may conform to legal regulations in the country of the locus.

In some embodiments, data, information, etc. may be acquired after user consent is obtained.

In addition, each element, each row, or each column in the table of the embodiments of the present disclosure may be implemented as an independent embodiment. Combination of any element, any row, or any column may also be implemented as an independent embodiment.

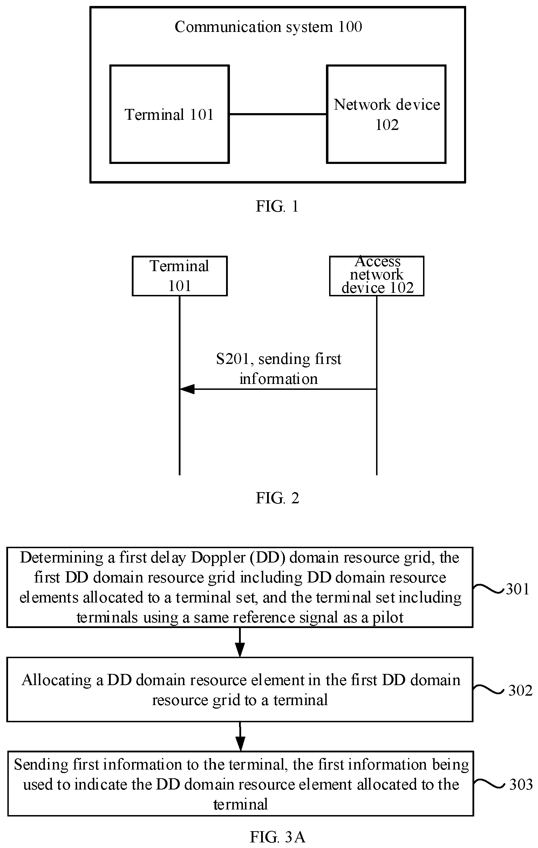

FIG. 1 is a schematic architectural diagram of a communication system shown according to an embodiment of the present disclosure.

As shown in FIG. 1, the communication system 100 includes a terminal 101 and a network device 102, where the network device includes at least one of an access network device or a core network device.

In some embodiments, the terminal 101 includes, for example, at least one of a mobile phone, a wearable device, an Internet of Things device, a car having a communication function, an intelligent car, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in smart home, which is not limited to this.

In some embodiments, the access network device is, for example, a node or a device that accesses a terminal to a wireless network. The access network device may include at least one of an evolved NodeB (eNB) in a 5G communication system, a next generation eNB (ng-eNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, or an access node in a Wi-Fi system, which is not limited to this.

In some embodiments, the core network device may be a device including one or more network elements; or, the core network device may be a plurality of devices or a device group, each of which includes all or part of the foregoing one or more network elements. The network element may be virtual or may be an entity. The core network includes, for example, at least one of Evolved Packet Core (EPC), 5G Core Network (5GCN), or Next Generation Core (NGC).

In some embodiments, the technical solution of the present disclosure may be applied to an Open RAN architecture. In this case, an interface between access network devices or within an access network device in the embodiments of the present disclosure may become an internal interface of an Open RAN. Processes and information interactions between these internal interfaces may be implemented by software or programs.

In some embodiments, the access network device may be composed of a central unit (central unit, CU) and a distributed unit (distributed unit, DU), where the CU may also be referred to as a control unit. The structure of the CU-DU may be used to split the protocol layers of the access network device. The functions of partial protocol layers are controlled in the CU, the functions of the remaining partial or all protocol layers are distributed in the DU, and the DU is concentratedly controlled by the CU, which is not limited to this.

It may be understood that the communication system described in the embodiments of the present disclosure is intended to describe the technical solutions of the embodiments of the present disclosure more clearly, and does not constitute a limitation on the technical solutions provided in the embodiments of the present disclosure. Those of ordinary skill in the art may know that with the evolution of the system architecture and the appearance of the new service scenario, the technical solutions provided in the embodiments of the present disclosure are also applicable to similar technical problems.

The following embodiments of the present disclosure may be applied to the communication system 100 or partial main bodies shown in FIG. 1, which is not limited to this. The various main bodies shown in FIG. 1 are examples. The communication system may include all or part of the main bodies in FIG. 1, or may include another main body other than FIG. 1. The quantity and form of each main body are arbitrary. Each main body may be an entity or virtual. The connection relationship between the main bodies is an example. The main bodies may be disconnected or connected. The connection between the main bodies may be of any manner, which may be a direct connection or an indirect connection, or may be a wired connection or a wireless connection.

The various embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New Radio Access (NX), Future Generation Radio Access (FX), Global System for Mobile communications (GSM, which is a registered trademark), CDMA2000, Ultra Mobile Broadband (UMB), IEEE 802.11 (Wi-Fi, which is a registered trademark), IEEE 802.16 (WiMAX, which is a registered trademark), IEEE 802.20, Ultra-Wideband (UWB), Bluetooth (a registered trademark), Land Public Mobile Network (PLMN) network, Device-to-Device (D2D) system, Machine to Machine (M2M) system, Internet of Things (IoT) system, Vehicle-to-Everything (V2X), a system utilizing other communication methods, a next generation system spread based on the above, etc. In addition, combination of a plurality of systems (e.g., combination of LTE or LTE-A with 5G, etc.) may also be applied.

FIG. 2 is a schematic interaction diagram of a method of resource configuration for an OTFS system shown according to an embodiment of the present disclosure.

As shown in FIG. 2, the method of resource configuration for an OTFS system includes the following step.

In step S201, a network device sends first information to a terminal.

In some embodiments, the network device may send first information to the terminal, where the first information is used to indicate a DD domain resource element allocated to the terminal.

In some embodiments, the first information includes at least one of: first configuration information, where the first configuration information is used to indicate a first DD domain resource grid; second configuration information, where the second configuration information is used to indicate the DD domain resource element allocated to the terminal; or, third configuration information, where the third configuration information is used to indicate a DD domain resource element allocated to the reference signal and a DD domain resource element allocated to a guard interval.

Among them, the first configuration information, the second configuration information, and the third configuration information may be carried by a same message or carried by different messages.

In some embodiments, the first information may be carried by a radio resource control (RRC) signaling.

In some embodiments, before sending the first information to the terminal, the network device may further: determine the first delay Doppler (DD) domain resource grid, where the first DD domain resource grid includes DD domain resource elements allocated to a terminal set, and the terminal set includes terminals that use a same reference signal as a pilot; and, allocates the DD domain resource element in the first DD domain resource grid to the terminal.

In some embodiments, the network device may determine the first DD domain resource grid from a delay Doppler (DD) domain resource grid corresponding to a first OTFS frame.

In some embodiments, the reference signal is a demodulation reference signal (DMRS).

In some embodiments, the first configuration information sent by the network device to the terminal may include at least one of: a start position of the first DD domain resource grid in a delay domain; an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

In some embodiments, the second configuration information sent by the network device to the terminal includes at least one of: a start position of the DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity of the DD domain resource element allocated to the terminal in a Doppler domain.

In some embodiments, in a case that the DD domain resource element allocated to the terminal, the DD domain resource element allocated to the reference signal and the DD domain resource element allocated to the guard interval occupy all resource elements of the first DD domain resource grid in a delay domain, the second configuration information includes a start position of the DD domain resource element allocated to the terminal in a Doppler domain.

In some embodiments, the DD domain resource element, allocated to the terminal in the terminal set, in the first DD domain resource grid does not include a DD domain resource element having a same delay domain position as the reference signal.

In some embodiments, after receiving the first information from the network device, the terminal may determine, based on the first information, the DD domain resource element allocated to the terminal in the first DD domain resource grid.

In some embodiments, reference may be made to other optional embodiments described before or after the description corresponding to FIG. 2.

In a cellular mobile network, Orthogonal Frequency Division Multiplexing (OFDM) is widely used. Although the impact of multipath delay may be well solved by adding a cyclic prefix (CP), the performance of the OFDM system still becomes worse in a time-varying channel. For a higher radio frequency or a very higher moving speed of a terminal, for example, a high-speed rail scenario, a Doppler shift and a Doppler spread of a wireless channel are relatively larger, which causes the inter-carrier interference (ICI) in the OFDM system. Although the impact of Doppler may be reduced by using a larger subcarrier spacing (SCS), under a certain overhead, the length of the CP is also proportionally reduced, which causes the CP to be insufficient to combat the impact of multipath delay. In order to improve wireless communication system performance in high Doppler situations, OTFS technology emerges and is widely discussed in academia and industry. In an OTFS system, a constellation symbol is first mapped to a Delay Doppler (DD) domain, a signal is then converted into a Time Frequency (TF) domain by using an Inverse Sympletic Fast Fourier Transform (ISFFT), and then the signal is converted into a time domain by using a Hesenburg transform. After the OTFS time domain signal passes through the channel, inverse transforms of the foregoing transforms, i.e., a Wigner transform and a Sympletic Fast Fourier Transform (SFFT) transform, are performed at the receiving end, and the signal is converted into a DD domain signal for equalization detection and decoding. In the OTFS system, after ISFFT transform, data symbols on each DD domain resource element (RE) in the DD domain are spread to all time-frequency resource elements in the TF domain, that is, the data symbols have equally experienced frequency selectivity and time diversity of time-frequency resource elements in the TF domain. Therefore, all data symbols in the DD domain may be approximated as experiencing the same non-time-varying channel. How to allocate resources to a plurality of users in an OTFS system becomes a technical problem that needs to be solved.

Embodiments of the present disclosure provide a method of resource configuration for an OTFS system. FIG. 3A is a schematic flowchart of a method of resource configuration for an OTFS system shown according to an embodiment of the present disclosure. The method of resource configuration for the OTFS system shown in the embodiment may be performed by a network device.

As shown in FIG. 3A, the method of resource configuration for the OTFS system may include the following steps.

In step S301, a first delay Doppler (DD) domain resource grid is determined, where the first DD domain resource grid includes DD domain resource elements allocated to a terminal set, and the terminal set includes terminals using a same reference signal as a pilot.

In step S302, a DD domain resource element in the first DD domain resource grid is allocated to a terminal.

In step S303, first information is sent to the terminal, where the first information is used to indicate the DD domain resource element allocated to the terminal.

Since in the OTFS system, data symbols on each DD domain resource element sent in the DD domain are spread to all time-frequency resource elements in the time-frequency domain, the reference signal sent in the DD domain is also spread to all time-frequency resource elements in the time-frequency domain. Accordingly, if the resource elements in the DD domain in the first DD domain resource grid are allocated to a plurality of terminals, it may be considered that these terminals share the reference signal transmitted in the first DD domain resource grid as a pilot.

Among them, the reference signal that may be used as a pilot may be set according to actual needs. For example, the reference signal may be a demodulation reference signal (DMRS) used for assisting a receiving end to perform demodulation; or, the reference signal may be a primary synchronization signal (PSS) used for coarse symbol timing and frequency offset estimation over a time domain; or, the reference signal may be a secondary synchronization signal (SSS) used for refined cell identification and frequency offset estimation in the frequency domain; or, the reference signal may be a cell specific reference signal (CRS) used to measure channel quality and perform downlink channel estimation; or, the reference signal may be a channel state information reference signal (CSI-RS) used to estimate channel state information, or the like.

In some embodiments, the network device may divide the terminals that may use a same reference signal as a pilot into a terminal set. For example, terminals using the reference signal as the pilot are divided into a terminal set.

In some embodiments, the network device may first determine the first DD domain resource grid including the DD domain resource element that may be allocated to a terminal in the terminal set.

Among them, the manner of determining the first DD domain resource grid may be set according to actual needs. For example, the first DD domain resource grid may be determined by indicating each DD domain resource element included in the first DD domain resource grid, or by indicating the range or resource element quantity occupied by the first DD domain resource grid in the delay domain and the Doppler domain, or the like.

Then, the DD domain resource elements in the first DD domain resource grid are respectively allocated to each terminal in the terminal set, and the DD domain resource element allocated to the terminal is indicated to each terminal by using the first information.

Among them, the manner of sending the first information may be set according to actual needs. For example, the first information may be carried by at least one of: a radio resource control (RRC) message, a medium access control control element (MAC-CE), or downlink control information (DCI).

In some embodiments, different DD domain resource elements, same DD domain resource element, or partially same DD domain resource elements may be allocated to different terminals.

It should be noted that the resource grid may also be referred to as a resource lattice, and the first DD domain resource grid may also be referred to as a first DD domain resource lattice.

It should be noted that the embodiment shown in FIG. 3A may be implemented independently, or may be implemented in combination with at least one other embodiment in the present disclosure, which may be selected according to needs, and is not limited in the present disclosure.

Based on the foregoing embodiment, the DD domain resource element in the first DD domain resource grid is allocated to the terminal using the same reference signal, thus implementing reasonable allocation of the DD domain resource element.

In some embodiments, the network device may be preconfigured with a DD domain resource grid including complete DD domain resource elements, and determine the first DD domain resource grid that may be allocated to the terminal set from the DD domain resource grid including complete DD domain resource elements.

Among them, the configuration manner of the DD domain resource grid may be performed according to actual needs, and may be predefined by a protocol, indicated by a higher layer, indicated by a network side, or the like.

In an implementation, configuration information of a first OTFS frame may be obtained in advance, and the configuration information is used to indicate a DD domain resource grid corresponding to the first OTFS frame. For example, the configuration information may indicate the resource element quantity M of the DD domain resource grid in the delay domain and the resource element quantity N of the DD domain resource grid in the Doppler domain. It may be determined that the DD domain resource grid includes M1*N1 DD domain resource elements.

The DD domain resource grid corresponding to the first OTFS frame is used as the DD domain resource grid including complete DD domain resource elements, from which the first DD domain resource grid is determined. The area occupied by the first DD domain resource grid in the DD domain resource grid corresponding to the first OTFS frame may be determined. For example, the range of the resource elements occupied by the first DD domain resource grid in the delay domain and the range of the resource elements occupied by the first DD domain resource grid in the Doppler domain may be determined. Among them, the range of the resource elements occupied in the delay domain may be expressed as M group (Mgroup), and the range of the resource elements occupied in the Doppler domain may be represented as N group (Ngroup).

Among them, there may be various representation manners for the Mgroup and the Ngroup. For example, for the Mgroup, positions of all resource elements included in the Mgroup in the delay domain may be listed in the Mgroup; or, a start position and an end position in the delay domain may be indicated; or, a start position, an end position, and a resource element quantity in the delay domain may be indicated; or, a resource element quantity and an end position in the delay domain may be indicated. For the Ngroup, positions of all resource elements included in the Ngroup in the Doppler domain may be listed in the Ngroup; or, a start position and an end position in the Doppler domain may be indicated; or, a start position, an end position and a resource element quantity in the Doppler domain may be indicated; or, a resource element quantity and an end position in the Doppler domain may be indicated.

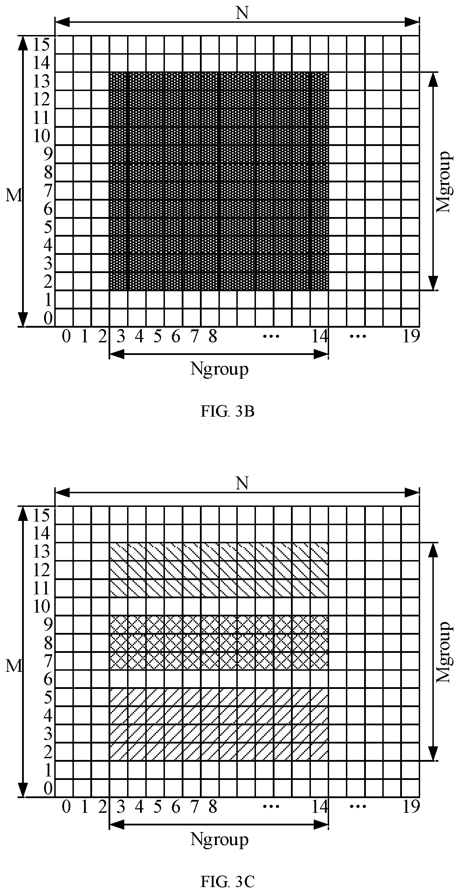

As shown in FIG. 3B, in the delay domain, the resource element quantity M of the DD domain resource grid including complete DD domain resource elements is 16; and in the Doppler domain, the resource element quantity N of the DD domain resource grid including complete DD domain resource elements is 20. The first DD domain resource grid is indicated by the Mgroup in the delay domain and the Ngroup in the Doppler domain, where the Mgroup and the Ngroup respectively indicate that the first DD domain resource grid occupies the resource elements 2 to 13 in the delay domain, and occupies the resource elements 3 to 14 in the Doppler domain.

The determined DD domain resource element in the first DD domain resource grid is respectively allocated to each terminal in the terminal set.

Among them, there may be various manners of allocating the DD domain resource element in the first DD domain resource grid to the terminal. For example, allocation may be performed preferentially in the delay domain, or allocation may be performed preferentially in the Doppler domain.

If allocation is performed preferentially in the delay domain, which is equivalent to dividing and allocating the DD domain resource elements in the delay domain, each terminal is allocated with the DD domain resource element occupied by the corresponding delay domain range, which is also equivalent to that a corresponding delay domain range from the Mgroup is allocated to each terminal. After receiving the corresponding delay domain range, the terminal may perform data transmission by using the DD domain resource element occupied by the corresponding delay domain range in the first DD domain resource grid.

For example, as shown in FIG. 3C, the terminal set includes three terminals UE1, UE2, and UE3. A corresponding delay domain range is respectively allocated to each terminal: the UE1 is allocated with a delay domain range of 2 to 5, the UE2 is allocated with a delay domain range of 7 to 9, and the UE3 is allocated with the delay domain range of 11 to 13. Correspondingly, the UE1 may use the DD domain resource elements occupied by the delay domain range of 2 to 5 in the first DD domain resource grid, the UE2 may use the DD domain resource elements occupied by the delay domain range of 7 to 9 in the first DD domain resource grid, and the UE3 may use the DD domain resource elements occupied by the delay domain range of 11 to 13 in the first DD domain resource grid.

If allocation may be performed preferentially in the Doppler domain, which is equivalent to dividing and allocating the DD domain resource elements in the Doppler domain, each terminal is allocated with the DD domain resource element occupied by the corresponding Doppler domain range, which is also equivalent to that a corresponding Doppler domain range from the Ngroup is allocated to each terminal. After receiving the corresponding Doppler domain range, the terminal may perform data transmission by using the DD domain resource element occupied by the corresponding Doppler domain range in the first DD domain resource grid.

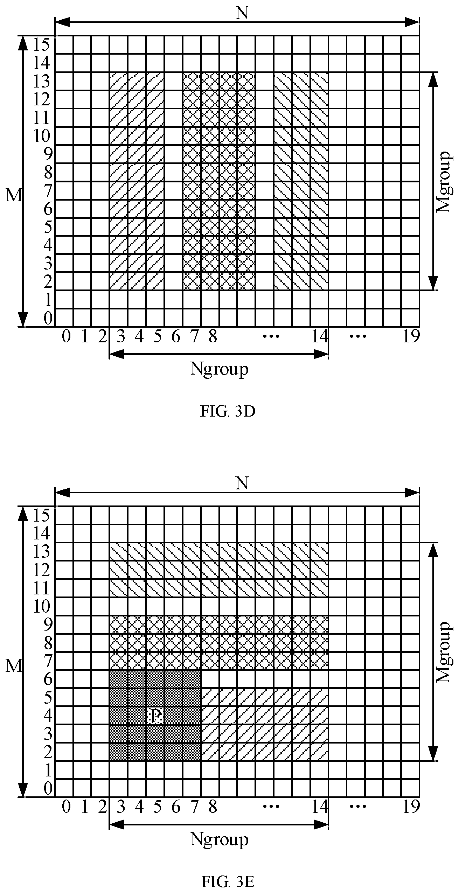

For example, as shown in FIG. 3D, the terminal set includes three terminals UE1, UE2, and UE3. A corresponding Doppler domain range is respectively allocated to each terminal: the UE1 is allocated with a Doppler domain range of 3 to 5, the UE2 is allocated with a Doppler domain range of 7 to 10, and the UE3 is allocated with the Doppler domain range of 12 to 14. Correspondingly, the UE1 may use the DD domain resource elements occupied by the Doppler domain range of 3 to 5 in the first DD domain resource grid, the UE2 may use the DD domain resource elements occupied by the Doppler domain range of 7 to 10 in the first DD domain resource grid, and the UE3 may use the DD domain resource elements occupied by the Doppler domain range of 12 to14 in the first DD domain resource grid.

When the DD domain resource elements in the first DD domain resource grid are allocated to the terminal, some DD domain resource elements need to be allocated to the reference signal and the guard interval corresponding to the reference signal. When each terminal determines the DD domain resource elements that may be used, the DD domain resource element allocated to the reference signal and the DD domain resource element allocated to the guard interval need to be removed therefrom.

For example, as shown in FIG. 3E, on the basis of FIG. 3C, the DD domain resource element P is the DD domain resource element allocated to the reference signal, and the DD domain resource elements around the DD domain resource element P are DD domain resource elements allocated to the guard interval. Some of the DD domain resource elements occupied by the delay domain range of 2 to 5 allocated to the UE1 are occupied by the reference signal and the guard interval. The UE1 may use the DD domain resource elements, from which the DD domain resource element allocated to the reference signal and the DD domain resource elements allocated to the guard interval are removed, occupied by the delay domain range of 2 to 5 in the first DD domain resource grid.

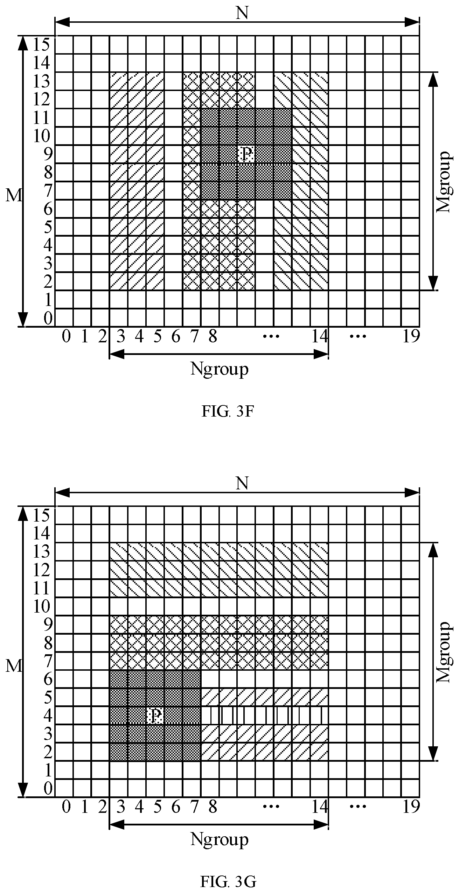

For example, as shown in FIG. 3F, on the basis of FIG. 3D, the DD domain resource element P is the DD domain resource element allocated to the reference signal, and the DD domain resource elements around the DD domain resource element P are DD domain resource elements allocated to the guard interval. Some of the DD domain resource elements occupied by the Doppler domain range of 7 to 10 allocated to the UE2 are occupied by the reference signal and the guard interval. The UE2 may use the remaining DD domain resource elements, from which the DD domain resource element allocated to the reference signal and the DD domain resource elements allocated to the guard interval are removed, in the DD domain resource elements occupied by the Doppler domain range of 7 to 10. Some of the DD domain resource elements occupied by the Doppler domain range of 12 to 14 allocated to the UE3 are occupied by the guard interval, and the UE3 may use the remaining DD domain resource elements, from which the DD domain resource elements allocated to the guard interval are removed, in the DD domain resource elements occupied by Doppler domain range of 12 to 14.

In some embodiments, to protect the reference signal, the DD domain resource element allocated to the terminal in the power boosting that benefits the reference signal does not include the DD domain resource element having the same delay domain position as the reference signal.

For example, as shown in FIG. 3G, the delay domain position where the reference signal is located is the delay domain 4. On the basis of FIG. 3E, the UE1 may use the remaining DD domain resource elements, from which the DD domain resource elements allocated to the reference signal and to the guard interval as well as the DD domain resource elements occupied by the delay domain 4 are removed, in the DD domain resource elements occupied by the delay domain range of 2 to 5.

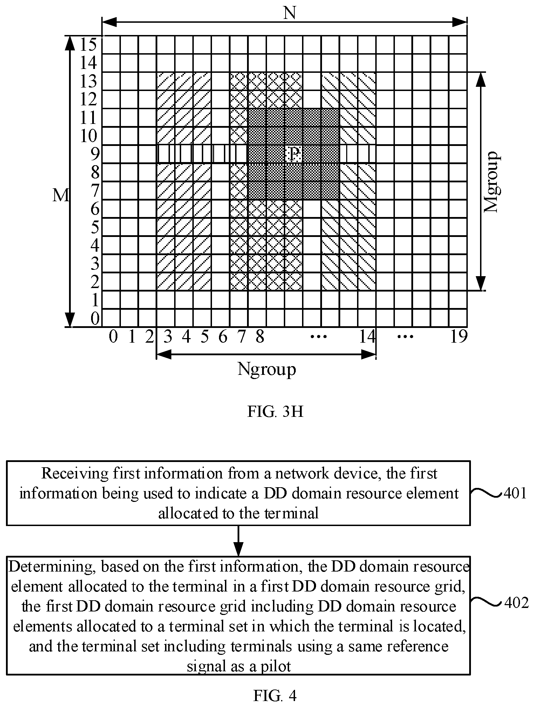

For example, as shown in FIG. 3H, the delay domain position where the reference signal is located is the delay domain 9. The UE1 may use the remaining DD domain resource elements, from which the DD domain resource elements occupied by the delay domain 9 are removed, in the DD domain resource elements occupied by the Doppler domain range of 3 to 5. The UE2 may use the remaining DD domain resource elements, from which the DD domain resource elements allocated to the reference signal and to the guard interval as well as the DD domain resource elements occupied by the delay domain 9 are removed, in the DD domain resource elements occupied by the Doppler domain range of 7 to 10. The UE3 may use the remaining DD domain resource elements, from which the DD domain resource elements allocated to the guard interval and the DD domain resource elements occupied by the delay domain 9 are removed, in the DD domain resource elements occupied by the Doppler domain range of 12 to 14.

It should be noted that the position and quantity of DD domain units allocated to the reference signal and to the guard interval in the first DD domain resource grid may be set according to actual needs. In addition, the first DD domain resource grid may also include more than one reference signal, which is not specifically limited here.

In some embodiments, the network device may respectively send corresponding first information to each terminal in the terminal set, where the first information is used to indicate the DD domain resource element allocated to each terminal in the first DD domain resource grid.

Among them, the first information includes at least one of: first configuration information, second configuration information, or third configuration information.

Among them, the first configuration information is used to indicate the first DD domain resource grid.

The second configuration information is used to indicate the DD domain resource element allocated to the terminal.

The third configuration information is used to indicate the DD domain resource element allocated to the reference signal.

Further, the third configuration information may be further used to indicate the DD domain resource element allocated to the guard interval, where the guard interval is used to keep the reference signal at a certain interval from other data. The guard interval may also be preconfigured or predefined.

The first configuration information, the second configuration information, and the third configuration information may be carried by a same message, or may be separately carried by a plurality of messages, which is not specifically limited here.

The message for carrying the first information may include at least one of an RRC message, a MAC-CE, or DCI.

In some embodiments, the first configuration information may include: a start position DeS of the first DD domain resource grid in the delay domain, an end position DeE of the first DD domain resource grid in the delay domain, a resource element quantity DeN of the first DD domain resource grid in the delay domain, a start position DoS of the first DD domain resource grid in the Doppler domain, an end position DoE of the first DD domain resource grid in the Doppler domain, and a resource element quantity DoN of the first DD domain resource grid in the Doppler domain.

In some embodiments, the first configuration information may include configuration information respectively for the delay domain and the Doppler domain, or may only include configuration information for the delay domain, or may only include configuration information for the Doppler domain.

Respectively for the delay domain and the Doppler domain, the first configuration information may respectively indicate the start position, the end position, and/or the resource element quantity through a plurality of bit fields; or, the first configuration information may also jointly represent the start position, the end position, and/or the resource element quantity respectively through one bit field.

For example, the first configuration information may include: a start position DeS of the first DD domain resource grid in the delay domain, a resource element quantity DeN of the first DD domain resource grid in the delay domain, a start position DoS of the first DD domain resource grid in the Doppler domain, and a resource element quantity DoN of the first DD domain resource grid in the Doppler domain.

Among them, there may be various specific representation manners of the start position DeS and the resource element quantity DeN in the delay domain, and the start position DoS and the resource element quantity DoN the in the Doppler domain.

For the delay domain, for example, two bit fields of B1 and B2 may be used to independently indicate the start position DeS and the resource element quantity DeN, where $\left⌈{log}_{2} M\right⌉$ bits may be respectively used by B1 and B2 to independently indicate the start position DeS and the resource element quantity DeN. For another example, the start position DeS and the resource element quantity DeN may also be jointly indicated by using one bit field B3, where $\left⌈{log}_{2} M\left(M+1\right)/2\right⌉$ bits may be used by B3 to jointly indicate the start position DeS and the resource element quantity DeN.

Correspondingly, for the Doppler domain, for example, two bit fields of B4 and B5 may be used to independently indicate the start position DoS and the resource element quantity DoN, where $\left⌈{log}_{2} N\right⌉$ bits may be respectively used by B4 and B5 to independently indicate the start location DoS and the resource element quantity DoN. For another example, the start location DoS and the resource element quantity DoN may also be jointly indicated by using one bit field B6, where $\left⌈{log}_{2} N\left(N+1\right)/2\right⌉$ bits may be used by B6 to jointly indicate the start position DoS and the resource element quantity DoN.

In some embodiments, the second configuration information may include at least one of: a start position of the DD domain resource element allocated to the terminal in the delay domain, an end position of the DD domain resource element allocated to the terminal in the delay domain, a resource element quantity of the DD domain resource element allocated to the terminal in the delay domain, a start position of the DD domain resource element allocated to the terminal in the Doppler domain, an end position of the DD domain resource element allocated to the terminal in the Doppler domain, or a resource element quantity allocated to the DD domain resource element of the terminal in the Doppler domain.

In some embodiments, the first configuration information may include configuration information respectively for the delay domain and the Doppler domain, or may only include configuration information for the delay domain, or may only include configuration information for the Doppler domain.

In some embodiments, the second configuration information may include configuration information respectively for the delay domain and the Doppler domain, and the corresponding configuration information is used based on the priority for the resource allocation. For example, if the delay domain allocation is preferentially used, the configuration information for the delay domain in the second configuration information is preferentially used; and if the configuration information for the Doppler domain is preferentially used, the configuration information for the Doppler domain in the second configuration information is preferentially used.

Respectively for the delay domain and the Doppler domain, the second configuration information may indicate the start position, the end position, and/or the resource element quantity respectively through a plurality of bit fields; or, the second configuration information may also jointly represent the start position, the end position, and/or the resource element quantity respectively through one bit field.

For example, the second configuration information may include: a start position DeS1 of the DD domain resource element allocated to the UE1 in the delay domain, a resource element quantity DeN1 of the DD domain resource element allocated to the UE1 in the delay domain, a start position DoS1 of the DD domain resource element allocated to the UE1 in the Doppler domain, or a resource element quantity DoN1 of the DD domain resource element allocated to the UE1 in the Doppler domain.

Among them, there may be various specific representation manners of the start position DeS1 and the resource element quantity DeN1 in the delay domain, and the start position DoS1 and the resource element quantity DoN1 in the Doppler domain.

For the delay domain, for example, two bit fields of B11 and B12 may be used to independently indicate the start position DeS1 and the resource element quantity DeN1, where $\left⌈{log}_{2} M\right⌉$ or $\left⌈{log}_{2} DeN\right⌉$ bits may be respectively used by B11 and B12 to independently indicate the start position DeS1 and the resource element quantity DeN1. For another example, the start position DeS1 and the resource element quantity DeN1 may also be jointly indicated by using one bit field B3, where $\left⌈{log}_{2} M\left(M+1\right)/2\right⌉$ or $\left⌈{log}_{2} DeN\left(DeN+1\right)/2\right⌉$ bits may be used by B3 to jointly indicate the start position DeS1 and the resource element quantity DeN1.

Correspondingly, for the Doppler domain, for example, two bit fields of B14 and B15 may be used to independently indicate the start location DoS1 and the resource element quantity DoN1, where $\left⌈{log}_{2} N\right⌉$ or $\left⌈{log}_{2} DoN\right⌉$ bits may be respectively used by B14 and B15 to independently indicate the start location DoS1 and the resource element quantity DoN1. For another example, the start location DoS1 and the resource element quantity DoN1 may also be jointly indicated by using one bit field of B6, where $\left⌈{log}_{2} N\left(N+1\right)/2\right⌉$ or $\left⌈{log}_{2} DoN\left(DoN+1\right)/2\right⌉$ bits may be used by B6 to jointly indicate the start position DoS1 and the resource element quantity DoN1.

In some embodiments, in a case that the DD domain resource element allocated to the reference signal and the DD domain resource element allocated to the guard interval occupy all resource elements of the first DD domain resource grid in the delay domain, the second configuration information may include only the start position of the DD domain resource element allocated to the terminal in the Doppler domain.

According to the received second configuration information, the terminal may determine the DD domain resource element allocated to the terminal according to the DD domain resource elements allocated to the reference signal and to the guard interval, the start position in the Doppler domain allocated to the terminal and the start position in the Doppler allocated to the neighboring terminal.

For example, as shown in FIG. 3C, in the second configuration information, it may only indicate that the start position DoS1 in the Doppler domain corresponding to the UE1 is 3, the start position DoS2 in the Doppler domain corresponding to the UE2 is 7, and the start position DoS3 in the Doppler domain corresponding to the UE3 is 12. After receiving the first information, the UE1 may determine, according to the DoS1 and the DoS2, that the Doppler domain range allocated to the UE1 is 3 to 5, so as to determine that the DD domain resource element allocated to the UE1 is the remaining DD domain resource elements, from which the DD domain resource elements occupied by the reference signal and the guard interval are removed, in the DD domain resource elements occupied by the Doppler domain range of 3 to 5 in the first DD domain resource grid.

In some implementations, in some embodiments, in a case that the DD domain resource element allocated to the reference signal and the DD domain resource element allocated to the guard interval occupy all resource elements of the first DD domain resource grid in the Doppler domain, the second configuration information may include only the start position of the DD domain resource element allocated to the terminal in the delay domain.

Based on the foregoing embodiment, the network device may configure the first DD domain resource grid to the terminal in a plurality of manners, so as to configure the DD domain resource element for the terminal, so that the terminal may determine the usable DD domain resource element in the first DD domain resource grid. Accordingly, flexible configuration of the DD domain resource element may be implemented in the OTFS system.

In some embodiments, the terminals in the terminal set in the OTFS system may share the same DMRS as the pilot. The method for allocating the DD domain resource element to the terminal in the terminal set is as follows.

An Mgroup in the delay domain and an Ngroup in the Doppler domain in a DD domain resource grid corresponding to a first OTFS frame are indicated to the terminal, where a first DD domain resource grid corresponding to the terminal set may be determined from the DD domain resource grid corresponding to the first OTFS frame based on the Mgroup and the Ngroup, and the first DD domain resource grid includes DD domain resource elements that may be allocated to the terminal in the terminal set.

Further, the Mgroup and the Ngroup may be configured to the terminal by using RRC signaling.

For example, the Mgroup and/or the Ngroup may be represented by a start position and a length (a resource element quantity).

For example, the start position and the length may be independently indicated by using two bit fields, respectively. That is, for the Mgroup, two $\left⌈{log}_{2} M\right⌉$ bits may be respectively used to independently indicate the start position and the length. For the Ngroup, two $\left⌈{log}_{2} N\right⌉$ bits may be respectively used to independently indicate the start position and the length.

For example, the start position and the length may be jointly indicated by using one bit field. That is, for the Mgroup, $\left⌈{log}_{2} M\left(M+1\right)/2\right⌉$ bits may be used to jointly indicate the start position and the length. For the Ngroup, $\left⌈{log}_{2} N\left(N+1\right)/2\right⌉$ bits may be respectively used to jointly indicate the start position and the length.

The DD domain resource element configured for the terminal from the Mgroup and the Ngroup is indicated to the terminal.

Among them, the delay domain allocation manner may be preferentially used; or, the Doppler domain allocation manner may be preferentially used.

For each terminal, the DD domain resource element allocated to the terminal may be indicated by a bit field.

For example, for the delay domain or the Doppler domain, a start position and an end position of the DD domain resource element allocated to the terminal may be independently or jointly indicated.

For example, for the delay domain or the Doppler domain, a start position and a length of the DD domain resource element allocated to the terminal may be independently or jointly indicated.

Further, for the case that the DD domain resource elements occupied by the terminal, the reference signal, and the guard interval occupy the full bandwidth, only the start position in the Doppler domain needs to be indicated to the terminal.

Further, all Doppler taps occupied by the same delay domain (the DD domain resource elements occupied by the same delay domain position) as the reference signal may not be used to send the data signal, which is beneficial to the power boosting of the reference signal.

Embodiments of the present disclosure provide a method of resource configuration for an OTFS system. FIG. 4 is a schematic flowchart of a method of resource configuration for an OTFS system shown according to an embodiment of the present disclosure. The method of resource configuration for the OTFS system shown in the embodiment may be performed by a network device.

As shown in FIG. 4, the method of resource configuration for the OTFS system may include the following steps.

In step S401, first information is received from a network device, where the first information is used to indicate a DD domain resource element allocated to the terminal.

In step S402, the DD domain resource element allocated to the terminal in a first DD domain resource grid is determined based on the first information, where the first DD domain resource grid includes DD domain resource elements allocated to a terminal set in which the terminal is located, and the terminal set includes terminals that use a same reference signal as a pilot.

It should be noted that the embodiment shown in FIG. 4 may be implemented independently, or may be implemented in combination with at least one other embodiment in the present disclosure, which may be selected according to needs, and is not limited in the present disclosure.

Based on the foregoing embodiment, the DD domain resource elements in the first DD domain resource grid are allocated to the terminals using the same reference signal, thus implementing reasonable allocation of the DD domain resource elements.

In some embodiments, the first information includes at least one of: first configuration information, where the first configuration information is used to indicate the first DD domain resource grid; second configuration information, where the second configuration information is used to indicate the resource element allocated to the terminal; or third configuration information, where the third configuration information is used to indicate a DD domain resource element allocated to the reference signal and a DD domain resource element allocated to the guard interval.

In some embodiments, the first DD domain resource grid is determined from a delay Doppler (DD) domain resource grid corresponding to a first OTFS frame.

In some embodiments, the reference signal is a demodulation reference signal (DMRS).

In some embodiments, the first information is carried by an RRC signaling.

In some embodiments, the first configuration information includes at least one of: a start position of the first DD domain resource grid in a delay domain, an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

In some embodiments, the second configuration information includes at least one of: a start position of the DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity of the DD domain resource element allocated to the terminal in a Doppler domain.

In some embodiments, in a case that the DD domain resource element allocated to the reference signal and the DD domain resource element allocated to the guard interval occupy all resource elements of the first DD domain resource grid in the delay domain, the second configuration information includes a start position of the resource element allocated to the terminal in the Doppler domain.

In some embodiments, the DD domain resource element allocated to the terminal in the first DD domain resource grid does not include a DD domain resource element having a same delay domain position as the reference signal.

In some embodiments, names such as information are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip", or the like may be replaced with each other.

In some embodiments, terms such as "moment", "time point", "time", and "time location", or the like may be replaced with each other, and terms such as "duration", "period", "time window", "window", "time", or the like may be replaced with each other.

In some embodiments, terms such as "component carrier (CC)", "cell", "frequency carrier", "carrier frequency", or the like may be replaced with each other.

In some embodiments, "requiring", "obtaining", "getting", "receiving", "transmitting", "bidirectional transmission", and "sending and/or receiving" may be replaced with each other, which may be interpreted as various meanings such as receiving from other bodies, obtaining from a protocol, obtaining from a higher layer, obtaining by processing itself, autonomous implementation, or the like.

In some embodiments, terms such as "sending", "transmitting", "reporting", "issuing", "transmission", "bidirectional transmission", "sending and/or receiving", or the like may be replaced with each other.

Corresponding to the foregoing embodiments of the method of resource configuration for the OTFS system, the present disclosure further provides embodiments of a terminal and a network device.

An embodiment of the present disclosure further provides a network device, including: one or more processors, and a memory coupled to the processor, where the memory stores an executable instruction, and when the executable instruction is executed by the processors, the network device is caused to perform the method of resource configuration for the OTFS system described in the foregoing embodiments.

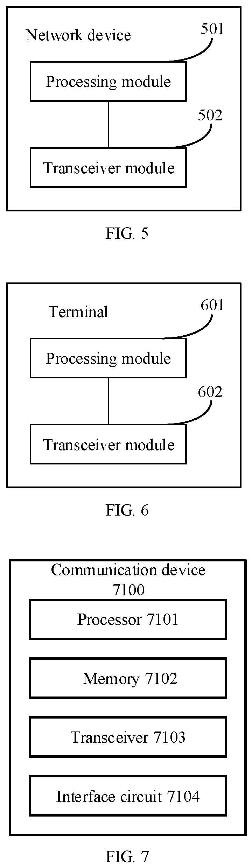

FIG. 5 is a schematic block diagram of an apparatus structure of a network device shown according to an embodiment of the present disclosure. As shown in FIG. 5, the network device may be an apparatus of resource configuration for an OTFS system, and the apparatus includes a processing module 501 and a transceiver module 502.

In some embodiments, the processing module 501 is configured to determine a first delay Doppler (DD) domain resource grid, where the first DD domain resource grid includes DD domain resource elements allocated to a terminal set, and the terminal set includes terminals that uses a same reference signal as a pilot. The processing module 501 is further configured to allocate a DD domain resource element in the first DD domain resource grid to the terminal. The transceiver module 502 is configured to send first information to the terminal, where the first information is used to indicate the DD domain resource element allocated to the terminal.

In some embodiments, the processing module 501 is configured to determine the first DD domain resource grid from a delay Doppler (DD) domain resource grid corresponding to a first OTFS frame.

In some embodiments, the reference signal is a demodulation reference signal (DMRS).

In some embodiments, the processing module 501 is configured to allocate the DD domain resource element in the first DD domain resource grid to the terminal in the terminal set based on a delay domain and/or a Doppler domain.

In some embodiments, the first information includes at least one of: first configuration information, where the first configuration information is used to indicate the first DD domain resource grid; second configuration information, where the second configuration information is used to indicate the DD domain resource element allocated to the terminal; or third configuration information, where the third configuration information is used to indicate a DD domain resource element allocated to the reference signal and a DD domain resource element allocated to a guard interval.

In some embodiments, the first information is carried by a radio resource control (RRC) signaling.

In some embodiments, the first configuration information includes at least one of: a start position of the first DD domain resource grid in a delay domain, an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

In some embodiments, the second configuration information includes at least one of: a start position of the DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity allocated to the DD domain resource element of the terminal in a Doppler domain.

In some embodiments, in a case that the DD domain resource element allocated to the terminal, the DD domain resource element allocated to the reference signal and the DD domain resource element allocated to the guard interval occupy all resource elements of the first DD domain resource grid in the delay domain, the second configuration information includes a start position of the DD domain resource element allocated to the terminal in the Doppler domain.

In some embodiments, the DD domain resource element, allocated to the terminal in the terminal set, in the first DD domain resource grid does not include a DD domain resource element having a same delay domain position as the reference signal.

It should be noted that the modules included in the network device are not limited to the modules described in the foregoing embodiments, and may also include other modules, such as a storage module, a display module, or the like.

An embodiment of the present disclosure further provides a terminal, including: one or more processors, and a memory coupled to the processor, where the memory stores an executable instruction, and when the executable instruction is executed by the processors, the terminal is caused to perform the method of resource configuration for the OTFS system described in the foregoing embodiments.

FIG. 6 is a schematic block diagram of an apparatus structure of a terminal shown according to an embodiment of the present disclosure. As shown in FIG. 5, the terminal may be an apparatus of resource configuration for an OTFS system, and the apparatus includes a processing module 601 and a transceiver module 602.

In some embodiments, the transceiver module 602 is configured to receive first information from a network device, where the first information is used to indicate a DD domain resource element allocated to the terminal. The processing module 601 is configured to determine, based on the first information, the DD domain resource element allocated to the apparatus in a first DD domain resource grid, where the first DD domain resource grid includes DD domain resource elements allocated to a terminal set in which the terminal is located, and the terminal set includes terminals that use a same reference signal as a pilot.

In some embodiments, the first information includes at least one of: first configuration information, where the first configuration information is used to indicate the first DD domain resource grid; second configuration information, where the second configuration information is used to indicate the resource element allocated to the terminal; or third configuration information, where the third configuration information is used to indicate a DD domain resource element allocated to the reference signal and a DD domain resource element allocated to a guard interval.

In some embodiments, the first DD domain resource grid is determined from a delay Doppler (DD) domain resource grid corresponding to a first OTFS frame.

In some embodiments, the reference signal is a demodulation reference signal (DMRS).

In some embodiments, the first information is carried by an RRC signaling.

In some embodiments, the first configuration information includes at least one of: a start position of the first DD domain resource grid in a delay domain, an end position of the first DD domain resource grid in a delay domain, a resource element quantity of the first DD domain resource grid in a delay domain, a start position of the first DD domain resource grid in a Doppler domain, an end position of the first DD domain resource grid in a Doppler domain, or a resource element quantity of the first DD domain resource grid in a Doppler domain.

In some embodiments, the second configuration information includes at least one of: a start position of a DD domain resource element allocated to the terminal in a delay domain, an end position of the DD domain resource element allocated to the terminal in a delay domain, a resource element quantity of the DD domain resource element allocated to the terminal in a delay domain, a start position of the DD domain resource element allocated to the terminal in a Doppler domain, an end position of the DD domain resource element allocated to the terminal in a Doppler domain, or a resource element quantity of the DD domain resource element allocated to the terminal in a Doppler domain.

In some embodiments, in a case that the DD domain resource element allocated to the reference signal and the DD domain resource element allocated to the guard interval occupy all resource elements of the first DD domain resource grid in the delay domain, the second configuration information includes a start position of the resource element allocated to the terminal in the Doppler domain.

In some embodiments, the DD domain resource element allocated to the terminal in the first DD domain resource grid does not include a DD domain resource element having a same delay domain position as the reference signal.

It should be noted that the modules included in the terminal are not limited to the modules described in the foregoing embodiments, and may also include other modules, such as a storage module, a display module, or the like.

Since the apparatus embodiments basically correspond to the method embodiments, for the correlations between them, reference may be made to partial descriptions of the method embodiments. The apparatus embodiments described above are merely illustrative, where the modules described as separate components may or may not be physically separate, and the components displayed as modules may or may not be physical modules, that is, may be located in one place, or may be distributed on a plurality of network modules. Some or all of the modules may be selected according to actual needs to achieve the objectives of the solutions of the embodiments. Those of ordinary skill in the art may understand and implement the embodiments without creative efforts.

An embodiment of the present disclosure further provides a communication device, including: one or more processors, and a memory coupled to the processor, where the memory stores an executable instruction, when the executable instruction is executed by the processor, the processor is caused to invoke the executable instruction to cause the communication device to perform the method of resource configuration for the OTFS system described in the foregoing optional embodiments.

An embodiment of the present disclosure further provides a communication system, including: a network device, configured to implement the method of resource configuration for the OTFS system according to the foregoing optional embodiments; and a terminal, configured to implement the method of resource configuration for the OTFS system according to the foregoing optional embodiments.

An embodiment of the present disclosure further provides a storage medium, where the storage medium stores instructions, and when the instructions run on a communication device, the communication device is caused to perform the method of resource configuration for the OTFS system described in the foregoing optional embodiments.

An embodiment of the present disclosure further provides an apparatus for implementing any one of the foregoing methods. For example, there is provided an apparatus, where the apparatus includes units or modules configured to implement steps performed by the terminal in any one of the foregoing methods. For another example, there is further provided another apparatus, including units or modules configured to implement steps performed by the network device (for example, an access network device, a core network function node, a core network device, or the like) in any one of the foregoing methods.

It should be understood that division of units or modules in the foregoing apparatus is merely a division of logical functions. In actual implementation, all or some of the units or modules may be integrated into one physical entity, or may be physically separated. In addition, the units or modules in the apparatus may be implemented in the form of processor invoking software. For example, the apparatus includes a processor, the processor is connected to the memory, the memory stores instructions, and the processor invokes the instructions stored in the memory to implement any one of the above methods or implement the functions of the units or modules of the foregoing apparatus, where the processor is, for example, a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and functions of some or all of the units or modules may be implemented by designing hardware circuits, and the foregoing hardware circuits may be understood as one or more processors. For example, in an implementation, the hardware circuit is an application-specific integrated circuit (ASIC), and functions of some or all of the units or modules are implemented by designing a logical relationship of elements in the circuit. For another example, in another implementation, the hardware circuit may be implemented by a programmable logic device (PLD). Taking the field programmable gate array (FPGA) as an example, it may include a large quantity of logic gate circuits, and a connection relationship between the logic gate circuits may be configured by using a configuration file, to implement functions of some or all of the units or modules. All units or modules of the foregoing apparatus may be implemented entirely in the form of processor invoking software, or entirely in the form of hardware circuits, or partially in the form of processor invoking software with the remaining part being implemented in the form of hardware circuits.

In the embodiments of the present disclosure, the processor is a circuit with signal processing capability. In an implementation, the processor may be a circuit with an instruction reading and running capability, such as a central processing unit (CPU), a microprocessor, a graphics processing unit (GPU) (which may be understood as a microprocessor), a digital signal processor (DSP), or the like. In another implementation, the processor may implement a certain function by using a logical relationship in a hardware circuit, and the logical relationship in the hardware circuit is fixed or reconfigurable; for example, the processor is an application-specific integrated circuit (ASIC) or a hardware circuit implemented by a programmable logic device (PLD), such as an FPGA. In a reconfigurable hardware circuit, the process in which the processor loads a configuration document to implement the hardware circuit configuration may be understood as a process in which the processor loads an instruction to implement the functions of some or all of the units or modules. In addition, the processor may be a hardware circuit designed for artificial intelligence, which may be understood as an ASIC, such as a neural network processing unit (NPU), a tensor processing unit (TPU), a deep learning processing unit (DPU), or the like.

FIG. 7 is a schematic structural diagram of a communication device 7100 provided according to an embodiment of the present disclosure. The communication device 7100 may be a network device (for example, an access network device, a core network device, or the like), or may be a terminal (for example, a user equipment), or may be a chip, a chip system, or a processor that supports the network device to implement any one of the foregoing methods, or may be a chip, a chip system, or a processor that supports the terminal to implement any one of the foregoing methods. The communication device 7100 may be configured to implement the method described in the foregoing method embodiments. For details, reference may be made to descriptions in the foregoing method embodiments.

As shown in FIG. 7, the communication device 7100 includes one or more processors 7101. The processor 7101 may be a general-purpose processor, a special-purpose processor, etc. For example, the processor 7101 may be a baseband processor or a central processor. The baseband processor may be configured to process a communication protocol and communication data; and, the central processor may be configured to control a communication apparatus (for example, a base station, a baseband chip, a terminal device, a terminal device chip, a DU, or a CU), execute a program, and process data of the program. The processor 7101 is configured to invoke instructions to cause the communication device 7100 to perform any one of the above methods.

In some embodiments, the communication device 7100 further includes one or more memories 7102 for storing instructions. Optionally, all or part of the memories 7102 may alternatively be outside the communication device 7100.

In some embodiments, the communication device 7100 further includes one or more transceivers 7103. In a case that the communication device 7100 includes one or more transceivers 7103, the communication steps such as transmitting and receiving in the above method are performed by the transceiver 7103, and other steps are performed by the processor 7101.

In some embodiments, the transceiver may include a receiver and a transmitter, which may be separate or integrated together. Optionally, terms such as a transceiver, a transceiver unit, a transceiver machine, a transceiver circuit, or the like may be replaced with each other. Terms such as a transmitter, a transmitting unit, a transmitting machine, a transmitting circuit, or the like may be replaced with each other. Terms such as a receiver, a receiving unit, a receiving machine, a receiving circuit, or the like may be replaced with each other.

Optionally, the communication device 7100 further includes one or more interface circuits 7104 connected to the memory 7102. The interface circuit 7104 may be used to receive signals from the memory 7102 or other apparatuses, and may be used to send signals to the memory 7102 or other apparatuses. For example, the interface circuit 7104 may read the instructions stored in the memory 7102 and send the instructions to the processor 7101.

The communication device 7100 in the above embodiment description may be a network device or a terminal, but the scope of the communication device 7100 described in the present disclosure is not limited to this, and the structure of the communication device 7100 may not be limited by FIG. 7. The communication device may be an independent device, or may be part of a larger device. For example, the communication device may be: 1) an independent integrated circuit IC, a chip, or a chip system or a subsystem; (2) a set with one or more ICs, optionally, the IC set may also include a storage component configured to store data and programs; (3) an ASIC, such as a modem; (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, or the like; (6) another device, etc.

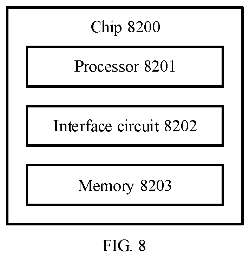

FIG. 8 is a schematic structural diagram of a chip 8200 provided according to an embodiment of the present disclosure. For a case in which the communication device 7100 may be a chip or a chip system, reference may be made to the schematic structural diagram of the chip 8200 shown in FIG. 8, but is not limited to this.

The chip 8200 includes one or more processors 8201 for invoking instructions to cause the chip 8200 to perform any of the above methods.

In some embodiments, the chip 8200 further includes one or more interface circuits 8202 connected to the memory 8203. The interface circuit 8202 may be configured to receive signals from the memory 8203 or other apparatuses, and the interface circuit 8202 may be configured to send signals to the memory

8203 or other apparatuses. For example, the interface circuit 8202 may read the instructions stored in the memory 8203 and send the instructions to the processor 8201. Optionally, terms such as the interface circuits, interfaces, transceiver pins, transceivers, etc. may be replaced with each other.

In some embodiments, the chip 8200 further includes one or more memories 8203 for storing instructions. Optionally, all or part of the memories 8203 may be outside the chip 8200.

The present disclosure further provides a storage medium, and the storage medium stores with an instruction. When the instruction runs on the communication device 7100, the communication device 7100 is caused to perform any of the above methods. Optionally, the storage medium is an electronic storage medium. Optionally, the storage medium is a computer-readable storage medium, which is not limited to this. The storage medium may also be a storage medium readable by another apparatus. Optionally, the storage medium may be a non-transitory storage medium, which is not limited to this. The storage medium may also be a transitory storage medium.

The present disclosure further provides a program product. When the program product is executed by the communication device 7100, the communication device 7100 is caused to perform any of the above methods. Optionally, the program product is a computer program product.

The present disclosure further provides a computer program. When the computer program runs on a computer, the computer is caused to perform any of the above methods.

## Claims

1. A method of resource configuration for an orthogonal time-frequency space, OTFS, system, wherein the method is performed by a network device, and the method comprises:
determining a first delay Doppler, DD, domain resource grid, wherein the first DD domain resource grid comprises DD domain resource elements allocated to a terminal set, and the terminal set comprises terminals using a same reference signal as a pilot;
allocating a DD domain resource element in the first DD domain resource grid to a terminal; and
sending first information to the terminal, wherein the first information is used to indicate the DD domain resource element allocated to the terminal.

2. The method according to claim 1, wherein determining the first delay Doppler, DD, domain resource grid comprises:
determine the first DD domain resource grid from a delay Doppler, DD, domain resource grid corresponding to a first OTFS frame.

3. The method according to claim 1 or 2, wherein the reference signal is a demodulation reference signal, DMRS.

4. The method according to any one of claims 1 to 3, wherein allocating the DD domain resource element in the first DD domain resource grid to the terminal comprises:
allocating the DD domain resource element in the first DD domain resource grid to the terminal based on a delay domain and/or a Doppler domain.

5. The method according to any one of claims 1 to 4, wherein the first information comprises at least one of:
first configuration information, wherein the first configuration information is used to indicate the first DD domain resource grid;
second configuration information, wherein the second configuration information is used to indicate the DD domain resource element allocated to the terminal; or
third configuration information, wherein the third configuration information is used to indicate a DD domain resource element allocated to the reference signal and a DD domain resource element allocated to a guard interval.

6. The method according to claim 5, wherein the first configuration information comprises at least one of:
a start position of the first DD domain resource grid in a delay domain;
an end position of the first DD domain resource grid in a delay domain;
a resource element quantity of the first DD domain resource grid in a delay domain;
a start position of the first DD domain resource grid in a Doppler domain;
an end position of the first DD domain resource grid in a Doppler domain; or
a resource element quantity of the first DD domain resource grid in a Doppler domain.

7. The method according to claim 5 or 6, wherein the second configuration information comprises at least one of:
a start position of the DD domain resource element allocated to the terminal in a delay domain;
an end position of the DD domain resource element allocated to the terminal in a delay domain;
a resource element quantity of the DD domain resource element allocated to the terminal in a delay domain;
a start position of the DD domain resource element allocated to the terminal in a Doppler domain;
an end position of the DD domain resource element allocated to the terminal in a Doppler domain; or
a resource element quantity of the DD domain resource element allocated to the terminal in a Doppler domain.

8. The method according to claim 5 or 6, wherein the second configuration information comprises a start position of the DD domain resource element allocated to the terminal in a Doppler domain, and wherein the DD domain resource element allocated to the terminal, the DD domain resource element allocated to the reference signal and the DD domain resource element allocated to the guard interval constitute the first DD domain resource grid in a delay domain.

9. The method according to any one of claims 1 to 8, wherein the DD domain resource element allocated to the terminal does not comprise a DD domain resource element having a same delay domain position as the reference signal.

10. A method of resource configuration for an OTFS system, wherein the method is performed by a terminal, and the method comprises:
receiving first information from a network device, wherein the first information is used to indicate a DD domain resource element allocated to the terminal; and
determining, based on the first information, the DD domain resource element allocated to the terminal in a first DD domain resource grid, wherein the first DD domain resource grid comprises DD domain resource elements allocated to a terminal set in which the terminal is located, and the terminal set comprises terminals using a same reference signal as a pilot.

11. The method according to claim 10, wherein the first DD domain resource grid is determined from a delay Doppler, DD, domain resource grid corresponding to a first OTFS frame.

12. The method according to claim 10 or 11, wherein the reference signal is a demodulation reference signal, DMRS.

13. The method according to any one of claims 10 to 12, wherein the first information comprises at least one of:
first configuration information, wherein the first configuration information is used to indicate the first DD domain resource grid;
second configuration information, wherein the second configuration information is used to indicate the resource element allocated to the terminal; or
third configuration information, wherein the third configuration information is used to indicate a DD domain resource element allocated to the reference signal and a DD domain resource element allocated to a guard interval.

14. The method according to claim 13, wherein the first configuration information comprises at least one of:
a start position of the first DD domain resource grid in a delay domain;
an end position of the first DD domain resource grid in a delay domain;
a resource element quantity of the first DD domain resource grid in a delay domain;
a start position of the first DD domain resource grid in a Doppler domain;
an end position of the first DD domain resource grid in a Doppler domain; or
a resource element quantity of the first DD domain resource grid in a Doppler domain.

15. The method according to claim 13 or 14, wherein the second configuration information comprises at least one of:
a start position of the DD domain resource element allocated to the terminal in a delay domain;
an end position of the DD domain resource element allocated to the terminal in a delay domain;
a resource element quantity of the DD domain resource element allocated to the terminal in a delay domain;
a start position of the DD domain resource element allocated to the terminal in a Doppler domain;
an end position of the DD domain resource element allocated to the terminal in a Doppler domain; or
a resource element quantity of the DD domain resource element allocated to the terminal in a Doppler domain.

16. The method according to claim 13 or 14, wherein the second configuration information comprises a start position of the resource element allocated to the terminal in a Doppler domain, and wherein the DD domain resource element allocated to the terminal, the DD domain resource element allocated to the reference signal and the DD domain resource element allocated to the guard interval constitute the first DD domain resource grid in a delay domain.

17. The method according to any one of claims 11 to 16, wherein the DD domain resource element allocated to the terminal does not comprise a DD domain resource element having a same delay domain position as the reference signal.

18. An apparatus of resource configuration for an OTFS system, wherein the apparatus comprises:
a processing module, configured to determine a first delay Doppler, DD, domain resource grid, wherein the first DD domain resource grid comprises DD domain resource elements allocated to a terminal set, and the terminal set comprises terminals using a same reference signal as a pilot, wherein the processing module is configured to allocate a DD domain resource element in the first DD domain resource grid to a terminal; and
a transceiver module, configured to send first information to the terminal, wherein the first information is used to indicate the DD domain resource element allocated to the terminal.

19. An apparatus of resource configuration for an OTFS system, wherein the apparatus comprises:
a transceiver module, configured to receive first information from a network device, wherein the first information is used to indicate a DD domain resource element allocated to a terminal; and
a processing module, configured to determine, based on the first information, the DD domain resource element allocated to the apparatus in a first DD domain resource grid, wherein the first DD domain resource grid comprises DD domain resource elements allocated to a terminal set in which the terminal is located, and the terminal set comprises terminal using a same reference signal as a pilot.

20. A network device, wherein the network device comprises:
one or more processors; and
a memory, coupled to the processors, wherein the memory stores an executable instruction, and wherein when the executable instruction is executed by the processors, the processors are caused to perform the method of resource configuration for the OTFS system according to any one of claims 1 to 9.

21. A terminal, wherein the terminal comprises:
one or more processors;
a memory, coupled to the processors, wherein the memory stores an executable instruction, and wherein when the executable instruction is executed by the processors, the processors are caused to perform the method of resource configuration for the OTFS system according to any one of claims 10 to 17.

22. A communication device, comprising:
one or more processors;
a memory, coupled to the processors, wherein the memory stores an executable instruction, and wherein when the executable instruction is executed by the processors, the processors are caused to invoke instructions to cause the communication device to perform the method of resource configuration for the OTFS system according to any one of claims 1 to 9 or the method of resource configuration for the OTFS system according to any one of claims 10 to 17.

23. A communication system, wherein the communication system comprises:
a network device, configured to implement the method of resource configuration for the OTFS system according to any one of claims 1 to 9; and
a terminal, configured to implement the method of resource configuration for the OTFS system according to any one of claims 10 to17.

24. A storage medium, storing an instruction, wherein when the instruction runs on a communication device, the communication device is caused to perform the method of resource configuration for the OTFS system according to any one of claims 1 to 9 or 10 to 17.
